# EUROPEAN PATENT SPECIFICATION

(11) **EP 1 365 616 B1**
(45) Date of publication and mention of the grant of the patent: **03.12.2003**
(21) Application number: 02360219.6
(22) Date of filing: 22.07.2002
(51) Int. Cl.: H04Q 7/38

(54) **Method for providing service management to network elements of a cellular communication network**
Verfahren zum Bereitstellen von Dienstverwaltung für Netzelemente eines zelluraren Kommunikationsnetzwerkes
Méthode pour fournir des services de gestion à des éléments d'un réseau de communication cellulaire

(43) Date of publication of application: 26.11.2003
(73) Proprietor: EVOLIUM S.A.S., 75008 Paris (FR)
(72) Inventor: Wisniewski, Eric, 75013 Paris (FR); Barquin, Mathieu, 91300 Massy (FR)
(74) Representative: Urlichs, Stefan, Dipl.-Phys.

(56) References cited:
- DE-A- 19 953 877
- SUN MICROSYSTEM: "Telecom Network Management with enterprise JavaBeans Technology" TECHNICAL WHITE PAPER, May 2001 (2001-05), XP002211655
- TOWLE T T: "TMN AS APPLIED TO THE GSM NETWORK" IEEE COMMUNICATIONS MAGAZINE, IEEE SERVICE CENTER. PISCATAWAY, N.J, US, vol. 33, no. 3, 1 March 1995 (1995-03-01), pages 68-73, XP000496015 ISSN: 0163-6804
- TOBBITTS F: "CORBA:A COMMON TOUCH FOR DISTRIBUTED APPLICATIONS" DATA COMMUNICATIONS, MCGRAW HILL. NEW YORK, US, vol. 24, no. 7, 21 May 1995 (1995-05-21), pages 71-75, XP000506540 ISSN: 0363-6399

## Description

### BACKGROUND OF THE INVENTION

The present invention relates to service management of network elements in a in a cellular communication network and more precisely to a method for controlling the data exchange format used between the network elements and the operation and maintenance center of the cellular communication network.

Due to different technologies implemented on different network elements (e.g. Radio network Controller RNC, Node B, Base Transceiver Station BTS ...) in a single cellular communication network and because frequent software upgrades have to be performed on these network elements, the format used for exchanging data between the network elements and the Operation and Maintenance Center is subject to frequent modifications. The data exchange format are usually called Management Information Base in the context of network elements communicating with the Operation and Maintenance Center. For example, the data exchange format must be changed when a new feature at a network element requires an additional parameter to be transmitted to the Operation and Maintenance Center.

Known in the art is that different mediation servers are implemented at the Operation and Maintenance Center to cope with the different data formats received from the different types of network elements. The task of a mediation server consists in translating a data following a predefined data format destined to the Operation and Maintenance Center in a Operation and Maintenance Center internal data format and vice-versa. Consequently, one mediation server per data exchange format should be available.

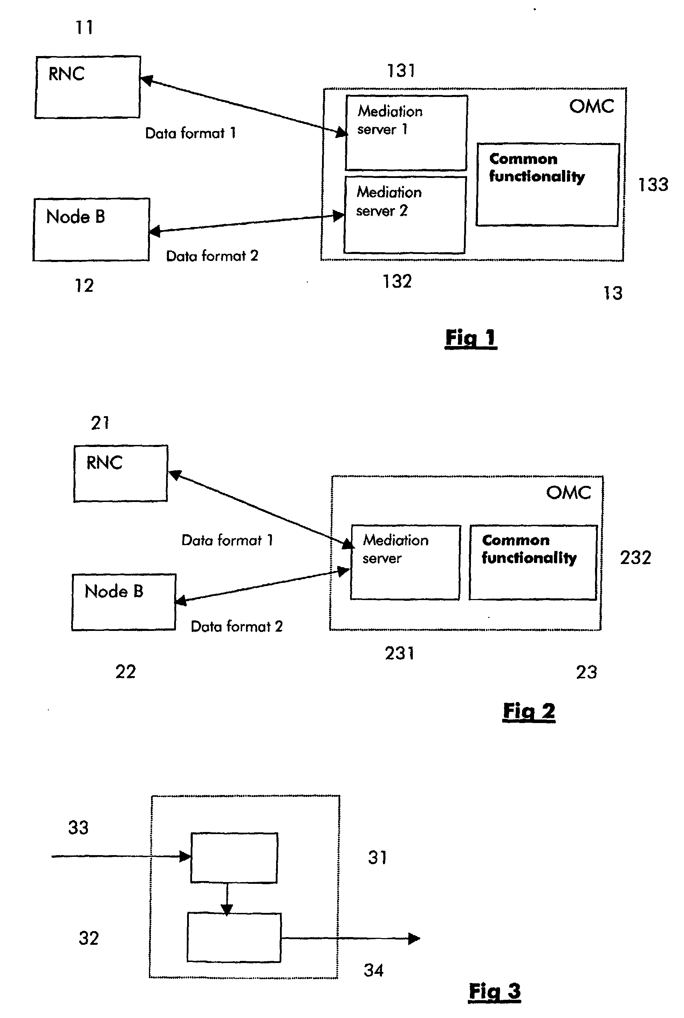

Such a prior art system is described in figure 1. Two network elements RNC 11 and Node B 12 are connected to Operation and Maintenance Center 13 over two different mediation servers 131 and 132. Mediation server 131 is specifically adapted to handle data having a first data exchange format used by RNC 11 and mediation server 132 is specifically adapted to handle data having a second data exchange format used by node B 12. Mediation servers 131 and 132 respectively convert the received data in a Operation and Maintenance Center internal data format used for performing common management functionality at module 133.

Another way of providing service management to Network Elements is through the use of translation connectors ("EJB" connectors) as in Telecom Networks Management with Java Beans™ technology by SUN.

These solutions present the drawback that a change of data exchange format consecutive to a software upgrade at a network element necessitates to change the handling mediation server or the connector. This procedure is time consuming because it implies an Operation and Maintenance Center reload as well as a service management outage. Another disadvantage of such an architecture is that some mediation servers may be overloaded while other are almost unused.

A particular object of the present invention is to provide a method for mitigating the previously listed drawbacks.

### SUMMARY OF THE INVENTION

These objects, and others that appear below, are achieved by a method for providing service management to network elements of a cellular communication network according to claim 1, and a mediation server according to claim 5.

According to the present invention, a generic mediation server is provided for, supporting a method comprising the steps of detecting a change in the data exchange format upon reception of data from a network element and of switching dynamically from the translation of a old data exchange format to the translation of the new identified data exchange format in a predefined Operation and Maintenance Center internal data format.

The method according to the present invention presents the advantage that no management service interruption is necessary when a software upgrade is performed.

Another advantage of the present invention is to have a better load balancing between several mediation servers since according to the invention all mediation servers can dynamically handle all the data exchange formats received from the network elements.

Further advantageous features of the invention are defined in the dependent claims.

### BRIEF DESCRIPTION OF THE DRAWINGS

Other characteristics and advantages of the invention will appear on reading the following description of a preferred embodiment given by way of non-limiting illustrations, and from the accompanying drawings, in which:
- Figure 1 shows a prior art system comprising network elements and an Operation and Maintenance Center comprising mediation servers;
- Figure 2 shows an implementation of a system comprising network elements and an Operation and Maintenance Center with a generic mediation server according to the present invention;
- Figure 3 shows the internal structure of a generic mediation server according to the present invention.

### DETAILED DESCRIPTION OF THE INVENTION

Figure 1 shows a prior art system comprising network elements and an Operation and Maintenance Center comprising mediation servers which has been described in relation with prior art.

Figure 2 shows an implementation of a system comprising network elements and an Operation and Maintenance Center with a generic mediation server according to the present invention. The system shown in figure 2 comprises two network elements RNC 21 and Node B 22 and an Operation and Maintenance Center 23 comprising a mediation server 231 according to the present invention.

It will be clear for a person skilled in the art that a plurality of network elements may be supported by the system but were reduced to two for sake of simplicity.

RNC 21, respectively Node B 22 uses a first, respectively a second data exchange format for communicating with the Operation and Maintenance Center 23. At Operation and Maintenance Center 23, the data are handled by a generic mediation server 231 which is adapted to translate the respective receive data exchange formats in an OMC internal data format used at module 232 performing common management functionality.

In a preferred embodiment of the invention a functionality performed at module 22 consists in downloading new software to network elements RNC 21 or Node B 22.

According to the present invention, a generic mediation server 231 can identify a change in the data exchange format used by one network element or while handling several network elements using different data formats, a change in the data exchange format due to the reception of data from different network elements.

Upon identifying such a change, mediation server 231 is able to dynamically switch from an old data exchange format to a new identified data exchange format without performing a restart or a reboot at the Operation and Maintenance Center 23. As a consequence, the service provided by Operation and Maintenance Center 23 is not interrupted.

In this embodiment of the present invention, the mediation server 231 is part of the Operation and Maintenance Center 23. In an alternative embodiment of the invention, mediation server 231 may be a stand alone device connectable to Operation and Maintenance Center over usual communication links. In such a case, mediation server 231 and Operation and Maintenance Center 23 may be manufactured by different manufacturers so that an appropriate interface between mediation server 231 and Operation and Maintenance Center 23 has to be defined.

In a preferred embodiment of the invention, several identical mediation servers 231 are available to handle the traffic between the network elements and the Operation and Maintenance Center. In this case, a control entity should be available for selecting one of the mediation servers 231 for handling the data to be exchanged between a network element 21, 22 and the Operation and Maintenance Center 23 preferably according to a usual predefined load balancing policy.

Figure 3 shows the internal structure of a generic mediation server according to the present invention. Mediation server comprises means 31 for identifying a change in the used data exchange format, means 32 for dynamically switching from an old used data exchange format to a new identified data exchange format.

Means 31 for identifying a change in the used data exchange format are connected to a mediation server interface 33 towards network elements. Upon reception from data over interface 33, means 31 for detecting a change in the used data format check if the received data exchange format matches with a data exchange format stored previously. If not, it triggers means 32 for dynamically switching from a old data exchange format to a new identified data exchange format. For this purpose, means 32 preferably supports the features "class dynamic loading" available in the Java programming language. This feature enable to load a class of objects corresponding to the new data exchange format without requiring a restart of the mediation server or of the Operation and Maintenance Center if the mediation server is part of it.

This presents the advantage to reduce the outage time of the Operation and Maintenance Center and as a consequence increase the performance of the system.

Moreover, means 32 translate the received data in an Operation and Maintenance system internal format. The translated data are further sent over an interface 34 to the Operation and Maintenance Center part dealing with common management functionality.

## Claims

1. Method for providing service management to a network element (21, 22) of a cellular communication network, said network element (21, 22) communicating with an Operation and Maintenance Center (23) of said cellular communication network by sending data having a data exchange format, said data exchanged format being translated in an Operation and Maintenance Center specific data format at a mediation server (231 ), said method being **characterized in that** it comprises the steps of:
- identifying at said mediation server (231) a change in said used data exchange format;
- dynamically switching translation from an old data exchange format to said new identified data exchange format.

2. Method according to claim 1, **characterized in that** it further comprises the steps of:
- representing said data exchange format in an object oriented programming, each of said data exchange format being represented by a class;
- using the feature "class dynamic upload" of the Java programming language to switch from an old data exchange format to a new identified data exchange format.

3. Method according to claim 1, **characterized in that** it comprises a step of:
selecting one out of a plurality of mediation servers (231) for handling information from a network element (21, 22) according to a predefined load balancing policy.

4. Method according to claim 1, **characterized in that** said data exchanged between said network element (21, 22) and said. Operation and Maintenance Center (23) consist in new software version download from the Operation and Maintenance Center (23) to said network element (21, 22).

5. Mediation server (231) to be used for translating a data exchange format used by a network element (21, 22) of a cellular communication network to a Operation and Maintenance Center specific data format; said mediation server being **characterized in that** it comprises:
- means for identifying a change in said used data exchange format;
- means for dynamically switching translation from an old data exchange format to said new identified data exchange format.

6. Mediation server according to claim 5, **characterized in that** said means for dynamically switching from an old data exchange format to said new identified data exchange format further uses the feature "class dynamic loading" of the Java programming language.

7. Mediation server according to claim 5, **characterized in that** it is a software component part of an Operation and Maintenance Center (23).

8. Mediation server (231) according to claim 5, **characterized in that** it is a software component on a stand alone device connectable to an Operation and Maintenance Center (23).

## Patentansprüche

1. Verfahren zum Bereitstellen von Dienstverwaltung für ein Netzelement (21, 22) eines zellularen Kommunikationsnetzwerkes, wobei das Netzelement (21, 22) mit einem Betriebs- und Wartungszentrum (23) des zellularen Kommunikationsnetzes kommuniziert, indem es Daten sendet, die ein Datenaustauschformat haben, und dieses Datenaustauschformat wird in einem Vermittlungs-Server (231) in ein spezielles Format des Betriebs- und Wartungszentrums umgesetzt, wobei das Verfahren **dadurch gekennzeichnet ist, dass** es folgende Schritte umfasst:
- Im Vermittlungs-Server (231) Erkennung einer Änderung des benutzten Datenaustauschformates;
- Dynamische Umschaltung der Umsetzung von einem alten Datenaustauschformat auf das neue, erkannte Datenaustauschformat.

2. Verfahren gemäß Anspruch 1, **dadurch gekennzeichnet, dass** es weiterhin die folgenden Schritte umfasst:
- Darstellung des Datenaustauschformates in einer objektorientierten Programmierung, wobei jedes der Datenaustauschformate durch eine Klasse repräsentiert wird;
- Verwendung der Funktion "class dynamic upload" der Programmiersprache Java zur Umschaltung von einem alten Datenaustauschformat auf ein neues, erkanntes Datenaustauschformat.

3. Verfahren gemäß Anspruch 1, **dadurch gekennzeichnet, dass** es den folgenden Schritt umfasst:
Auswahl eines aus einer Vielzahl von Vermittlungs-Servern (231) zur Behandlung von Information von einem Netzelement (21, 22) gemäß einer vordefinierten Lastausgleichs-Strategie.

4. Verfahren gemäß Anspruch 1, **dadurch gekennzeichnet, dass** die Daten, die zwischen den Netzelementen (21, 22) und dem Betriebs- und Wartungszentrum (23) ausgetauscht werden, aus einer neuen Software-Version bestehen, die vom Betriebs- und Wartungszentrum (23) in das Netzelement (21, 22) geladen wird.

5. Vermittlungs-Server (231), der zur Umsetzung eines von einem Netzelement (21, 22) eines zellularen Kommunikationsnetzes benutzen Datenaustauschformates in ein spezifisches Format eines Betriebs- und Wartungszentrums benutzt wird, wobei der Vermittlungs-Server **dadurch gekennzeichnet ist, dass** er folgendes umfasst:
- Mittel zur Erkennung einer Änderung im benutzten Datenaustauschformat;
- Mittel zur dynamischen Umschaltung der Umsetzung von einem alten Datenaustauschformat auf das neue, erkannte Datenaustauschformat.

6. Vermittlungs-Server gemäß Anspruch 5, **dadurch gekennzeichnet, dass** die Mittel zur dynamischen Umschaltung von einem alten Datenaustauschformat auf das neue, erkannte Datenaustauschformat weiterhin die Funktion "class dynamic loading" der Programmiersprache Java benutzen.

7. Vermittlungs-Server gemäß Anspruch 5, **dadurch gekennzeichnet, dass** er ein Software-Bestandteil des Betriebs- und Wartungszentrums (23) ist.

8. Vermittlungs-Server (231) gemäß Anspruch 5, **dadurch gekennzeichnet, dass** er ein Software-Bestandteil eines einzeln stehenden Gerätes ist, das an ein Betriebs- und Wartungszentrum (23) angeschlossen werden kann.

## Revendications

1. Procédé permettant de fournir une gestion des services à un élément du réseau (21, 22) d'un réseau de communications cellulaire, ledit élément du réseau (21, 22) communiquant avec un Centre de maintenance et d'opérations (23) dudit réseau de communications cellulaire en envoyant des données possédant un format d'échange de données, ledit format d'échange de données étant traduit en un format de données spécifique au Centre de maintenance d'opérations au niveau d'un serveur de médiation (231), ledit procédé étant **caractérisé en ce qu'**il comprend les étapes consistant à :
- identifier au niveau dudit serveur de médiation (213) une modification dans ledit format d'échange de données utilisé ;
- passer de manière dynamique de la traduction en un ancien format d'échange de données en une traduction en ledit nouveau format d'échange de données identifié.

2. Procédé selon la revendication 1, **caractérisé en ce qu'**il comprend en outre les étapes consistant à :
- représenter ledit format d'échange de données dans une programmation orientée objets, chacun desdits formats d'échange de données étant représenté par une classe ;
- utiliser la caractéristique de « chargement dynamique des classes » du langage de programmation Java pour passer d'un ancien format d'échange de données à un nouveau format d'échange de données identifié.

3. Procédé selon la revendication 1, **caractérisé en ce qu'**il comprend une étape consistant à :
- sélectionner un serveur parmi une pluralité de serveurs de médiation (231) afin de prendre en charge les informations provenant d'un élément du réseau (21, 22) selon une règle d'équilibrage des lignes prédéfinie.

4. Procédé selon la revendication 1, **caractérisé en ce que** lesdits échanges de données entre ledit élément du réseau (21, 22) et ledit Centre de maintenance et d'opérations (23) consistent en un téléchargement d'une nouvelle version logicielle depuis le Centre de maintenance et d'opérations (23) vers ledit élément du réseau (21, 22).

5. Serveur de médiation (231) à utiliser pour traduire un format d'échange de données utilisé par un élément du réseau (21, 22) d'un réseau de communications cellulaire en un format de données spécifique au Centre de maintenance et d'opérations ; ledit serveur de médiation étant **caractérisé en ce qu'**il comprend :
- un moyen permettant d'identifier une modification dans ledit format d'échange de données utilisé ;
- un moyen permettant de passer de manière dynamique d'une traduction en un ancien format d'échange de données en une traduction en ledit nouveau format d'échange de données identifié.

6. Serveur de médiation selon la revendication 5, **caractérisé en ce que** ledit moyen permettant de passer dynamiquement d'un ancien format d'échange de données en ledit nouveau format d'échange de données identifié utilise en outre la caractéristique de « chargement dynamique des classes » du langage de programmation Java.

7. Serveur de médiation selon la revendication 5, **caractérisé en ce qu'**il s'agit d'une partie de la composant logicielle d'un Centre de maintenance et d'opérations (23).

8. Serveur de médiation (231) selon la revendication 5, **caractérisé en ce qu'**il s'agit d'une composante logicielle d'un dispositif autonome pouvant être connecté à un Centre de maintenance et d'opérations (23).
